# EUROPEAN PATENT SPECIFICATION

(11) **EP 2 733 570 B1**
(45) Date of publication and mention of the grant of the patent: **26.02.2020**
(21) Application number: 13187327.5
(22) Date of filing: 04.10.2013
(51) Int. Cl.: G06F 1/3215, B65D 85/38, B65D 55/02

(54) **Automatic power-up from sales package**
Automatisches Einschalten einer Verkaufsverpackung
Mise sous tension automatique d'emballage de vente

(30) Priority: 20.11.2012 US 201213682180
(43) Date of publication of application: 21.05.2014
(73) Proprietor: Provenance Asset Group LLC, Pittsford, NY 14534 (US)
(72) Inventor: Magnusson, Birgir, 04170 Sipoo (FI); Kari, Juhani Valdemar, 21420 Lieto (FI); Toivola, Timo Tapani, 20540 Turku (FI)
(74) Representative: Espatent Oy

(56) References cited:
- DE-U1- 20 008 952
- GB-A- 2 482 931
- KR-A- 20090 077 173
- US-A1- 2010 035 656
- US-A1- 2011 304 648
- US-A1- 2012 096 290
- US-A1- 2012 215 075
- US-B1- 8 230 246

## Description

### TECHNICAL FIELD

The present invention generally relates to packaging of electronic devices. More particularly, though not exclusively, the invention relates to packaging of mobile phones.

### BACKGROUND ART

Mobile phones and/or smartphones are annually sold in vast amounts, in the scale of a billion phones. Each phone is typically packaged into a cardboard or plastic box with an arrangement to hold the phone and related accessories and with space for user instructions. The package is provided for transport, storage and display of products on sale as well as for providing purchasers and users with necessary information such as properties of the product in the package, and after purchase information on how to take the product in use. Korean patent application KR20090077173 discloses a package for a mobile phone comprising a sound output device configured to output a sound voice when the the package box is opened. US patent application US 2012/0215075 discloses a medical device in a heat shrunk plastic sealed packaging on which an "off" switch is attached. Said "off" switch maintains the medical device is an "off" state during shipping and storage. When the sealed packaging is opened, the medical device is switched on.

### SUMMARY

The invention is defined by the independent claims. Further aspects of the invention are outlined in the dependent claims. Embodiments relate only to claimed combinations of features. In the following, when the term "embodiment" relates to unclaimed combinations of features, said term has to be understood as referring to examples of the present invention. According to a first example aspect of the invention there is provided a package comprising:
a first part configured for supporting an electronic device;
a second part configured to fit on or around the first part for closing the package and enclosing the electronic device therein; wherein
the first part and the second part are configured to be movable relative to each other from a closed position to an open position; and wherein
the package comprises an element for generating a signal in response to the first part and the second part being moved from the closed position to the open position.

The element for generating the signal may comprise a permanent magnet.

The element for generating the signal may comprise a near field communication, NFC, unit.

According to a second example aspect of the invention there is provided an apparatus comprising:
a display;
a processor; and
a sensing element; wherein
the processor is configured to cause
   detecting a signal with the sensing element;
   powering up the apparatus in response to the signal; and
   automatically displaying information on the display.

The sensing element may comprise a reed relay.

The sensing element may comprise a mechanical switch.

The sensing element may comprise an optical sensor.

The element may comprise a magnetic sensor.

The display may comprise a touch sensitive display.

The processor may further be configured to cause, subsequent to powering up the apparatus, verifying that the powering up was intended.

The processor may further be configured to cause, subsequent to displaying the information, disabling the sensing element.

The processor may further be configured to cause activating a function of the apparatus in response to the signal.

The apparatus may comprise an electronic device.

The apparatus may comprise a smartphone or a mobile phone.

According to a third example aspect of the invention there is provided a method comprising:
moving a first part and a second part of a package relative to each other from a closed position to an open position; and
generating a signal in response to the first part and the second part being moved from the closed position to the open position.

The signal may be generated with a permanent magnet.

The signal may be generated with a near field communication, NFC, unit.

According to a fourth example aspect of the invention there is provided a method comprising:
detecting a signal with a sensing element;
powering up an apparatus in response to the signal; and
automatically displaying information on a display of the apparatus.

The sensing element may comprise a reed relay.

The sensing element may comprise a mechanical switch.

The sensing element may comprise an optical sensor.

The sensing element may comprise a magnetic sensor.

The display may comprise a touch sensitive display.

The method may further comprise, subsequent to powering up the apparatus, verifying that the powering up was intended.

The method may further comprise, subsequent to displaying the information, disabling the sensing element.

The method may further comprise activating a function of the apparatus in response to the signal.

The apparatus may comprise an electronic device.

The apparatus may comprise a smartphone or a mobile phone.

According to a fifth example aspect of the invention there is provided a system comprising:
a package comprising
   a first part configured for supporting an apparatus;
   a second part configured to fit on or around the first part for closing the package and enclosing the apparatus therein; wherein
   the first part and the second part are configured to be movable relative to each other from a closed position to an open position; and wherein
   the package comprises an element for generating a signal in response to the first part and the second part being moved from the closed position to the open position; wherein
the apparatus comprises
   a display;
   a processor; and
a sensing element; wherein
   the processor is configured to cause
      detecting the signal with the sensing element;
      powering up the apparatus in response to the signal; and
      automatically displaying information on the display.

The element for generating the signal may comprise a permanent magnet.

The element for generating the signal may comprise a near field communication, NFC, unit.

The sensing element may comprise a reed relay.

The sensing element may comprise a mechanical switch.

The sensing element may comprise an optical sensor.

The sensing element may comprise a magnetic sensor.

The display may comprise a touch sensitive display.

The processor may further be configured to cause, subsequent to powering up the apparatus, verifying that the powering up was necessary.

The processor may further be configured to cause, subsequent to displaying the information, disabling the sensing element.

The apparatus may comprise an electronic device.

The apparatus may comprise a smartphone or a mobile phone.

According to a sixth example aspect of the invention there is provided a method comprising:
moving a first part and a second part of a package relative to each other from a closed position to an open position;
generating a signal in response to the first part and the second part being moved from the closed position to the open position;
detecting a signal with a sensing element;
powering up an apparatus in response to the signal; and
automatically displaying information on a display of the apparatus.

The signal may be generated with a permanent magnet.

The signal may be generated with a near field communication, NFC, unit.

The sensing element may comprise a reed relay.

The sensing element may comprise a mechanical switch.

The sensing element may comprise an optical sensor.

The sensing element may comprise a magnetic sensor.

The display may comprise a touch sensitive display.

The method may further comprise, subsequent to powering up the apparatus, verifying that the powering up was necessary.

The method may further comprise, subsequent to displaying the information, disabling the sensing element.

The apparatus may comprise an electronic device.

The apparatus may comprise a smartphone or a mobile phone.

According to a seventh example aspect of the invention there is provided a computer program product comprising computer code for causing performing the method of any example aspect of the invention, when executed by an apparatus.

According to an eighth example aspect of the invention there is provided a memory medium comprising the computer program of the seventh example aspect of the invention.

Different non-binding example aspects and embodiments of the present invention have been illustrated in the foregoing. The above embodiments are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

The invention will be described, by way of example only, with reference to the accompanying drawings, in which:
Fig. 1 shows an example of an environment in which example embodiments of the invention are applied;
Fig. 2 shows schematic block diagram of an apparatus according to an example embodiment of the invention;
Fig. 3 shows a schematic circuit diagram of an out-of-box unit according to an example embodiment of the invention;
Fig. 4 shows a flow chart of a method according to an example embodiment of the invention;
Fig. 5 shows a flow chart of a method according to an example embodiment of the invention;
Fig. 6a shows a schematic top view of a sales package according to an example embodiment;
Fig. 6b shows a schematic side view of a sales package according to an example embodiment; and
Fig. 7 shows an example of an environment in which example embodiments of the invention are applied.

### DETAILED DESCRIPTION

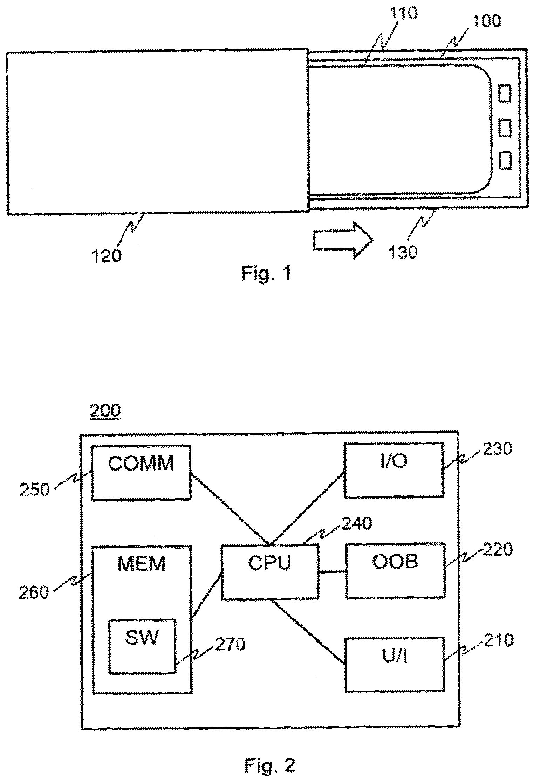

Some example embodiments of the present invention and potential advantages are understood by referring to Figs. 1 through 7 of the drawings.

Fig. 1 shows an example of an environment in which example embodiments of the invention are applied. An electronic device 100, for example a smart phone, is placed in a sales package, i.e. a box, for retail sales. After purchase the new owner of the device 100 opens the package, for example by sliding the part 130 of the package supporting the device 100 out from inside a cover or sleeve portion 120. When the package is opened and the device 100 is accessible, the new owner, hereinafter referred to as the user, retrieves the device from the package in order to take it in use. The sales package is often also opened in a retail store for purposes of demonstrating the device 100.

Conventionally, the package contains therein or thereon instructions on how to start using the device, e.g. instructions for attaching a battery and/or for inserting a subscriber identity module (SIM)-card into the device. Such instructions are often cumbersome to use and the user is not necessarily immediately aware that the device is ready to be taken into action and enjoyed. The device 100 comprises a user interface device 110, for example a touch sensitive display that is used for guiding the user in taking the device into use after the device has been powered up. In order to provide an enhanced user experience, an out-of-box experience (OOBE), the user interface device is automatically used for providing guidance and enjoyment, i.e. information and instructions in pleasing format for taking the device in use. In an example embodiment, the out-of-box experience and the instructions provided therewith comprise media such as video, audio, text, figures or still images.

Fig. 2 shows a schematic a block diagram of an apparatus 200 of an example embodiment. The apparatus 200 is suited for operating as the device 100. The apparatus 200 comprises a communication interface module 250, a processor 240 coupled to the communication interface module 250, and a memory 260 coupled to the processor 240. The apparatus further comprises and input/output (I/O) unit 230, a user interface (U/I) unit 210, such as a touch sensitive display and an out-of-box unit 220, which are coupled to the processor 240.

The memory 260 comprises a work memory and a non-volatile memory such as a read-only memory, flash memory, optical or magnetic memory. In the memory 260, typically at least initially in the non-volatile memory, there is stored software 270 operable to be loaded into and executed by the processor 240. The software 270 may comprise one or more software modules and can be in the form of a computer program product that is software stored in a memory medium.

It shall be understood that any coupling in this document refers to functional or operational coupling; there may be intervening components or circuitries in between coupled elements unless expressly otherwise described.

The communication interface module 250 is configured to provide local communications over one or more local links. The links may be wired and/or wireless links. The communication interface 250 may further or alternatively implement telecommunication links suited for establishing links with other users or for data transfer, e.g. using the Internet. Such telecommunication links may be links using any of: wireless local area network links, Bluetooth, ultra-wideband, cellular or satellite communication links. The communication interface 250 may be integrated into the apparatus 200 or into an adapter or card that may be inserted into a suitable slot or port of the apparatus 200. While Fig. 2 shows one communication interface 250, the apparatus may comprise a plurality of communication interfaces 250. In a further example embodiment, the apparatus further 200 comprises a near field communication (NFC) unit.

The processor 240 is, for instance, a central processing unit (CPU), a microprocessor, a digital signal processor (DSP), a graphics processing unit, an application specific integrated circuit (ASIC), a field programmable gate array, a microcontroller or a combination of such elements. Figure 2 shows one processor 240, but the apparatus 200 may comprise a plurality of processors.

As mentioned in the foregoing, the memory 260 may comprise volatile and a non-volatile memory, such as a read-only memory (ROM), a programmable read-only memory (PROM), erasable programmable read-only memory (EPROM), a random-access memory (RAM), a flash memory, a data disk, an optical storage, a magnetic storage or a smart card. In some example embodiments, only volatile or non-volatile memory is present in the apparatus 200. Moreover, in some example embodiments, the apparatus comprises a plurality of memories. In some example embodiments, various elements are integrated. For instance, the memory 260 can be constructed as a part of the apparatus 200 or inserted for example into a slot or a port. Further still, the memory 260 may serve the sole purpose of storing data, or it may be constructed as a part of an apparatus serving other purposes, such as processing data. Similar options are thinkable also for various other elements.

A skilled person appreciates that in addition to the elements shown in Fig. 2, the apparatus 200 may comprise other elements, such as microphones, displays, as well as additional circuitry such as a camera unit, further input/output (I/O) circuitries, memory chips, application-specific integrated circuits (ASIC), processing circuitry for specific purposes such as source coding/decoding circuitry, channel coding/decoding circuitry and ciphering/deciphering circuitry. Additionally, the apparatus 200 may comprise a disposable or rechargeable battery (not shown) for powering the apparatus if external power supply is not available.

It is also useful to realize that the term apparatus is used in this document with varying scope. In some of the broader claims and examples, the apparatus may refer to only a subset of the features presented in Fig. 2 or even be implemented without any one of the features of Fig. 2. In an example embodiment term apparatus refers to the processor 240.

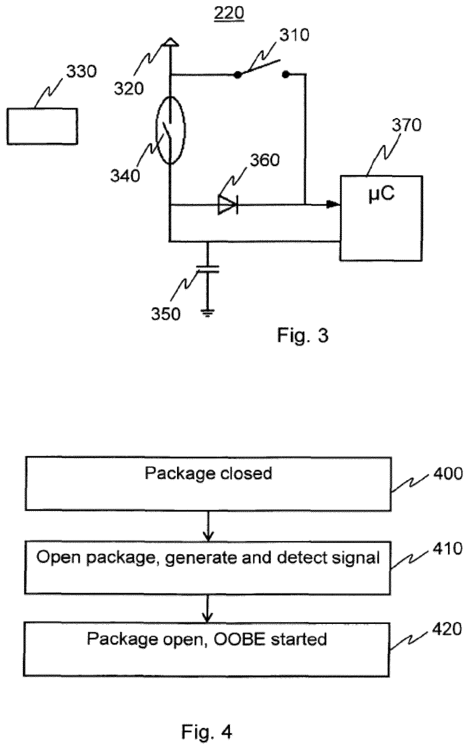

Fig. 3 shows a schematic circuit diagram of an out-of-box unit 220 according to an example embodiment of the invention. The out-of-box unit 220 is coupled to or integrated with the power button 310 of the apparatus 200. The out-of-box unit 220 further comprises a microcontroller 370. The microcontroller 370 is in an example embodiment a separate processor coupled to the processor 240, such as a processor of a type specified hereinbefore with reference to Fig. 1. In a further example embodiment, the microcontroller is a part of the processor 240, or the functionality thereof has been implemented in the processor 240.

In an example embodiment the out-of-box unit is connected 320 to an operating voltage, for example to the voltage provided by a battery, of the apparatus 200. The out-of-box unit 220 comprises a sensing element 340, for example a reed relay 340 responsive to a magnetic field, from a source 330, such as a permanent magnet, external to the apparatus 200, for example attached to the sales package in which the apparatus 200 resides prior to taking it into use. The sensing element 340 detects a signal from an external source 330 and closes the circuit, in an example embodiment, the circuit is closed while the reed relay 340 is in a magnetic field. In response to the sensing element 340 detecting the signal, the microcontroller 370 is powered up. The effect of the sensing element 340, e.g. the reed relay, closing the circuit is comparable to the effect of a user pushing the power button 310.

In an example embodiment, the microcontroller 370 comprises for example two inputs which the microcontroller is configured to check after powering up in order to determine whether the power button 310 has been pushed or the sensing element 340 has closed the circuit. A component, such as a diode 360, is comprised in the out-of-box unit for preventing the activation of the out-of-box experience when the power button has been pushed and the sensing element 340 has not closed the circuit. The out-of-box unit 220 further comprises a component, such as a capacitor 350, for providing a voltage to the input of the microcontroller 370 until the microcontroller is powered up, as the signal in response to which the sensing element 340 closed the circuit might not be present long enough for the microcontroller to power up and to determine whether the power button 310 has been pushed or the sensing element 340 has closed the circuit.

In an example embodiment, should the microcontroller determine that the sensing element has closed the circuit in response to a signal, an out-of-box experience is started. The microcontroller 370 and/or processor 240 are configured to carry out the steps of the out-of-box experience, for example to display information for the user on the touch sensitive display 210 of the apparatus 200. In a further example embodiment, the steps carried out in response to the sensing element closing the circuit and the detection thereof by the microcontroller are implemented by software for example stored in the memory of the apparatus 260 and executed by the processor 240 and/or the microcontroller 370.

In a further example embodiment, the out-of-box unit comprises, instead of e.g. a reed relay, an alternative arrangement as a sensing element, such as a relay, a switch or a sensor for activating the out-of-box experience. In an example embodiment, a mechanical switch is used in place of the reed relay. In a further example embodiment, a suitable photodiode is used instead or in addition to the reed relay and connected to the circuit in such a way that the diode allows the out-of-box experience start only when exposed to light, i.e. in the dark for example inside the sales package, the photodiode would prevent powering up the microcontroller.

In a further example embodiment, the out-of-box unit comprises instead or in addition to the reed relay 340, a sensor (not shown) for activating the out-of-box experience. The sensor comprises in an example embodiment a magnetic sensor, such as a hall sensor, for detecting an external magnetic field, or a light sensor, such as a photoresistor, phototransistor, or a photovoltaic cell. A skilled person appreciates that in such an embodiment conventional circuitry required by the sensor is comprised in the apparatus 200. In a further example embodiment, an additional sensor is used to verify that the out-of-box experience should start, i.e. that the apparatus 200 has been removed from the sales package or that the sales package is open, so that the apparatus 200 is exposed and it is intended that the out-of-box experience should start. If for example a light sensor detects that the apparatus 200 is still in the dark, the sequence for starting the out-of-box experience is aborted and the apparatus 200 is powered down. In a further example embodiment, the out-of-box experience can be started several times or repeatedly before the apparatus 200 has been fully taken into use. In an example embodiment, the out-of-box experience comprises a demonstration mode, for example for showing the capabilities of the apparatus in a retail store without taking the apparatus into use. In an example embodiment, an additional sensor is used as described hereinbefore to stop the out-of-box experience as the apparatus is returned to the sales package after demonstration.

In a further example embodiment the out-of-box experience is started with an element external to the apparatus 200. In an example embodiment, the sales package comprises an active unit, such as a near field communication (NFC) unit for powering up the microcontroller. A skilled person appreciates that in such an embodiment conventional circuitry required by the active element is comprised in the sales package.

In a further example embodiment, the power button 310 is implemented with software. In addition to the software implemented power button 310, the circuit for powering up the apparatus 200 with the power button 310 is mechanically broken by the reed relay 340, which substantially prevents any power leakage from occurring in the sales package.

In an example embodiment, after the out-of-box experience is concluded and the apparatus has successfully been taken into use, the functionality of the out-of-box unit 220 is disabled. Alternatively, the out-of-box unit is deactivated manually by the user, allowing for example the activation of the out-of-box experience for promotional purposes in retail sales. In a further example embodiment, the functionality is optionally reactivated by the user, e.g. for taking the device into use again after resetting. In a further example embodiment, the out-of-box unit 220 is used for other purposes after the out-of-box experience, e.g. for activating a different function of the apparatus 200 in response to a detected signal. In a further example embodiment, the function to be activated with the out-of-box unit 220 is chosen by the user, for example the user is able to specify that the apparatus should synchronize information stored in the memory 260 of the apparatus 200 with an external service in response to the signal being detected by the out-of-box unit. In such a case, the element generating the signal, for example the magnet, is located for example on a tabletop or in a dock, such as a wireless audio dock, or in a stylus used for or with the apparatus.

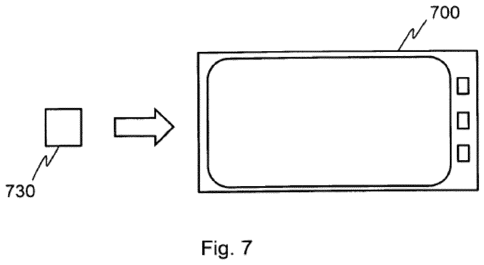

In a further example embodiment the out-of-box unit 220 is used to activate a funtion of the apparatus 200 that is subsequently configured to activate further functions. For example, the apparatus 200 comprises a near field communication (NFC) unit that requires battery power in an active mode and has a sleeping mode for saving power. In an example embodiment, the out-of-box unit 220 is configured to power up an NFC unit of the apparatus 200. With reference to Fig. 7, an element 730, such as a permanent magnet for activating the sensing element of the device 700, is placed in or in proximity of an NFC tag or a device, for example a wireless audio dock, wishing to communicate with the device 700 using near field communication. Accordingly, as the device 700 is brought into the proximity of the element 730 or the element 730 is brought into proximity of the device 700, the NFC unit of the device 700 is automatically activated without the user having to wake up the NFC unit manually.

Fig. 4 shows a flow chart of a method according to an example embodiment of the invention. At 400 the sales package is in a closed configuration and the apparatus 200 is enclosed therein. As the package is opened 410, a signal is generated and detected by the out-of-box unit 220. In response to the signal, the out-of-box unit powers up the apparatus 200 as hereinbefore and hereinafter described. A skilled person appreciated that the term signal encompasses any actuation, excitation or stimulus that is detected by the out-of-box unit 220 or an element comprised therein. In an example embodiment, the signal is an external magnetic field from a magnet 330 or light as hereinbefore described. At 420, the sales package is open and the out-of-box experience starts or is started.

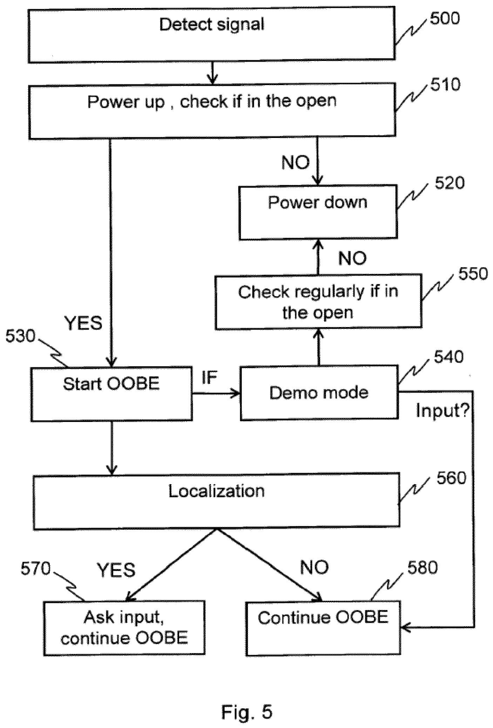

Fig. 5 shows a flow chart of a method according to an example embodiment of the invention. At 500 the out-of-box unit 220 or an element thereof, such as the reed relay 340, detects a signal such as an external magnetic field of the magnet 330. At 510 the out-of-box unit 220 powers up the apparatus 200 as hereinbefore described. In an example embodiment the out-of-box unit 220 or the apparatus 200 checks or verifies whether the apparatus 200 is in the open, i.e. exposed in the package or removed from the package e.g. by using a light sensor or other units of the apparatus 200, such as an acceleration sensor comprised therein. At 520, if the apparatus 200 is not exposed, the sequence for starting the out-of-box experience is aborted and the apparatus 200 is powered down. At 530, the apparatus 200 is exposed and the out-of-box experience is automatically started. In an example embodiment, the out-of-box experience includes localization, for example the choice of a language. In such a case, the out-of-box experience is started and after a while at 560 the user is asked for input 570 on the touch sensitive display 210 of the apparatus 200, for example the user is asked to choose a language, before the out-of-box experience is continued. If no localization is required, the out-of-box experience continues uninterrupted at 580.

In a further example embodiment, the out-of-box experience comprises a demonstration, or demo, mode as hereinbefore described. Accordingly, if the out-of-box experience comprises a demo mode 540, at 550 the apparatus 200 checks or verifies regularly, e.g. at every minute, whether the apparatus 200 is in the open, i.e. exposed in the package or removed from the package e.g. by using a light sensor or other units of the apparatus 200, such as an acceleration sensor comprised therein. At 520, if the apparatus 200 is not exposed 200, the sequence for starting the demonstration mode of the out-of-box experience is stopped and the apparatus 200 is powered down. In a further example embodiment, at demonstration mode, the user can provide input e.g. via the touch sensitive display to move away from the demonstration mode and continue 580 the out-of-box experience including the taking into use of the apparatus 200.

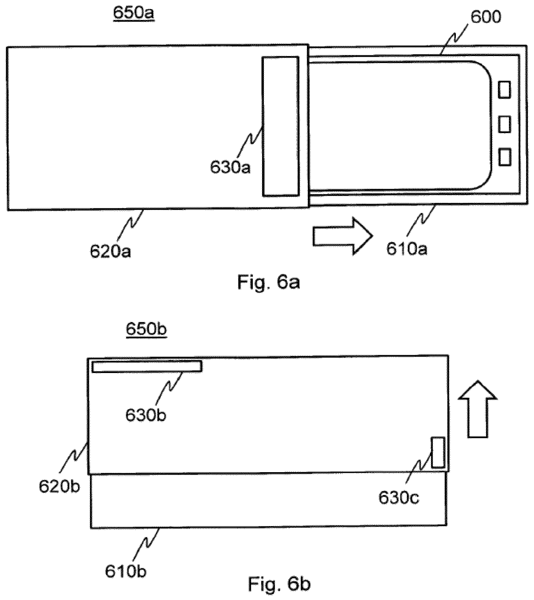

Figs. 6a and 6b show schematic views of sales packages according to example embodiments. In an example embodiment, the sales packages 650a,650b comprise a first part 610a,610b, e.g. a box, configured to support the apparatus 600 in the sales package. The sales packages 650a,650b comprise a second part 620a,620b, such as a sleeve or a lid, configured to fit on or around the first part 610a,610b to close the sales package 650a,650b and enclose the apparatus 600 therein. The first part 610a,610b and the second part 620a,620b are configured to be movable, e.g. by sliding, lifting or drawing out, relative to each other for opening and closing the sales package 650a,650b. The second part 620a,620b comprises an element 630a-c, e.g. a permanent magnet, configured to generate and/or provide a signal for an out-of-box unit of the apparatus 600 as herein before described. The element 630a-c is positioned in or on the second part 620a,620b in such a way as to generate and/or provide the signal during the opening of the sales package, i.e. as the first part 610a,610b and the second part 620a,620b are moved relative to each other from a closed position to an open position. In an example embodiment, the element 630a-c is positioned in such a way as to come into the proximity of the out-of-box unit, or be removed from the proximity thereof, of the apparatus 600 when the sales package is almost completely open.

In a further example embodiment, the sales package has different form, i.e. a further form conventional for a sales package, for example the first and second parts are connected to each other, and the sales package is opened by moving the second part in a manner of a hinged lid. A skilled person appreciates that in a further example embodiment, the sales package comprises further parts or elements, such as further parts enclosing and/or supporting the product or parts thereof, and/or elements such as a wrapper, price tags or information stickers. In a further example embodiment, the sales package has a still different form, for example the apparatus or product enclosed therein is enclosed in a one-piece plastic shell, i.e. the first and second part are connected to each other and movable relative to each other only by breaking the structure of the sales package. In such a case, the signal is generated and/or provided as the sales package is opened in a conventional manner, for example as the sales package is moved from a closed position to an open position by ripping off the shell enclosing the product.

Without in any way limiting the scope, interpretation, or application of the claims appearing below, a technical effect of one or more of the example embodiments disclosed herein is that an electronic device is taken into use faster and more easily. Another technical effect of one or more of the example embodiments disclosed herein is an enhanced and enjoyable user experience on purchase. Another technical effect of one or more of the example embodiments disclosed herein to provide an easy and power saving way of waking up active devices that are put to power saving mode.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

## Claims

1. A package comprising:
an apparatus (100) comprising:
a display (110);
a processor (240); and
a sensing element (340);
a first part (130) configured for supporting an apparatus (100);
a second part (120) configured to fit around the first part (130) for closing the package and enclosing the apparatus (100) therein; wherein
the first part (130) and the second part (120) are configured to be movable relative to each other from a closed position to an open position by moving the second part (120) from around the first part (130); wherein
the package comprises an element (630) for generating a signal in response to the first part (130) and the second part (120) being moved from the closed position to the open position; and wherein
the processor (240) is configured to:
detect the signal with the sensing element (340);
power up the apparatus (100) in response to the signal; and
automatically display information on the display (110).

2. The package according to claim 1, wherein the sensing element (340) is any one of: a reed relay, a mechanical switch, an optical sensor, a magnetic sensor.

3. The package according to any preceding claim, wherein the display (110) comprises a touch sensitive display.

4. The package according to any preceding claim, wherein the processor (240) is further configured to cause, subsequent to powering up the apparatus (100), verifying that the powering up was intended.

5. The package according to any preceding claim wherein the processor (240) is further configured to cause, subsequent to displaying the information, disabling the sensing element (340).

6. The package according to any preceding claim, wherein the processor (240) is further configured to cause activating a function of the apparatus (100) in response to the signal.

7. The package according to claim 1, wherein the element (630) for generating the signal is any one of a permanent magnet, a near field communication unit.

8. A method comprising:
moving a first part (130) and a second part (120) of a package according to claims 1-7, relative to each other from a closed position to an open position; and
generating a signal in response to the first part (130) and the second part (120) being moved from the closed position to the open position,
detecting the signal with a sensing element (340) comprised in an apparatus (100);
powering up the apparatus (100) in response to the signal; and
displaying information on a display (110) of the apparatus (100).

9. The method of claim 8, wherein the signal is generated with any one of; a permanent magnet, a near field communication unit.

10. The method of claim 8 or 9, wherein the sensing element (340) is any one of: a reed relay, a mechanical switch, an optical sensor, a magnetic sensor.

11. The method of claim according any of the claims 8 to 10, further comprising subsequent to powering up the apparatus (100) at least one of; verifying that the powering up was intended, disabling the sensing element (340).

12. The method of claim according any of the claims 8 to 10, further comprising subsequent to displaying the information, disabling the sensing element (340).

13. The method according to any of claims 8 to 12, further comprising activating a function of the apparatus (100) in response to the signal.

## Patentansprüche

1. Verpackung, Folgendes umfassend:
eine Vorrichtung (100), Folgendes umfassend:
eine Anzeige (110);
einen Prozessor (240); und
ein Erfassungselement (340);
einen ersten Teil (130), der zum Tragen einer Vorrichtung (100) konfiguriert ist;
einen zweiten Teil (120), der konfiguriert ist, um um den ersten Teil (130) herum zum Schließen der Verpackung und zum Umhüllen der Vorrichtung (100) darin zu passen; wobei
der erste Teil (130) und der zweite Teil (120) konfiguriert sind, um relativ zueinander von einer geschlossenen Position in eine offene Position durch Bewegen des zweiten Teils (120) von um den ersten Teil (130) herum bewegbar zu sein; wobei
die Verpackung ein Element (630) zum Erzeugen eines Signals als Reaktion darauf umfasst, dass der erste Teil (130) und der zweite Teil (120) von der geschlossenen Position in die offene Position bewegt werden; und wobei
der Prozessor (240) für Folgendes konfiguriert ist:
Erkennen des Signals mit dem Erfassungselement (340);
Einschalten der Vorrichtung (100) als Reaktion auf das Signal; und
automatisches Anzeigen von Informationen auf der Anzeige (110).

2. Verpackung nach Anspruch 1, wobei das Erfassungselement (340) Folgendes ist: ein Reed-Relais, eine mechanischer Schalter, ein optischer Sensor und/oder ein magnetischer Sensor.

3. Verpackung nach einem der vorhergehenden Ansprüche, wobei die Anzeige (110) eine berührungsempfindliche Anzeige umfasst.

4. Verpackung nach einem der vorhergehenden Ansprüche, wobei der Prozessor (240) ferner konfiguriert ist, um im Anschluss an das Einschalten der Vorrichtung (100) zu verifizieren, dass das Einschalten beabsichtigt war.

5. Verpackung nach einem der vorhergehenden Ansprüche, wobei der Prozessor (240) ferner konfiguriert ist, um im Anschluss an das Anzeigen von Informationen das Erfassungselement (340) zu sperren.

6. Verpackung nach einem der vorhergehenden Ansprüche, wobei der Prozessor (240) ferner konfiguriert ist, um ein Aktivieren einer Funktion der Vorrichtung (100) als Reaktion auf das Signal zu veranlassen.

7. Verpackung nach Anspruch 1, wobei das Element (630) zum Erzeugen des Signals ein Permanentmagnet und/oder eine Nahfeldkommunikationseinheit ist.

8. Verfahren, Folgendes umfassend:
Bewegen eines ersten Teils (130) und eines zweiten Teils (120) einer Verpackung nach den Ansprüchen 1-7 relativ zueinander von einer geschlossenen Position in eine offene Position; und
Erzeugen eines Signals als Reaktion darauf, dass der erste Teil (130) und der zweite Teil (120) von der geschlossenen Position in die offene Position bewegt werden,
Erkennen des Signals mit einem Erfassungselement (340), das in einer Vorrichtung (100) enthalten ist;
Einschalten der Vorrichtung (100) als Reaktion auf das Signal; und
Anzeigen von Informationen auf einer Anzeige (110) der Vorrichtung (100).

9. Verfahren nach Anspruch 8, wobei das Signal durch einen Permanentmagneten und/oder eine Nahfeldkommunikationseinheit erzeugt wird.

10. Verfahren nach Anspruch 8 oder 9, wobei das Erfassungselement (340) ein Reed-Relais, ein mechanischer Schalter, ein optischer Sensor und/oder ein magnetischer Sensor ist.

11. Verfahren nach Anspruch nach einem der Ansprüche 8 bis 10, ferner umfassend im Anschluss an das Einschalten der Einrichtung (100) das Verifizieren, dass das Einschalten beabsichtigt war und/oder das Sperren des Erfassungselements (340).

12. Verfahren nach Anspruch nach einem der Ansprüche 8 bis 10, ferner umfassend im Anschluss an das Anzeigen der Informationen das Sperren des Erfassungselements (340).

13. Verfahren nach einem der Ansprüche 8 bis 12, ferner umfassend das Aktivieren einer Funktion der Vorrichtung (100) als Reaktion auf das Signal.

## Revendications

1. Emballage comprenant :
un appareil (100) comprenant :
un écran (110) ;
un processeur (240) ; et
un élément de détection (340) ;
une première partie (130) conçue pour supporter un appareil (100) ;
une seconde partie (120) conçue pour s'ajuster autour de la première partie (130) afin de fermer l'emballage et d'y enfermer l'appareil (100) ;
la première partie (130) et la seconde partie (120) étant conçues pour être mobiles l'une par rapport à l'autre d'une position fermée à une position ouverte en déplaçant la seconde partie (120) depuis autour de la première partie (130) ;
l'emballage comprenant un élément (630) pour générer un signal en réponse à la première partie (130) et à la seconde partie (120) étant déplacées de la position fermée à la position ouverte ; et
le processeur (240) étant conçu pour :
détecter le signal avec l'élément de détection (340) ;
mettre l'appareil (100) sous tension en réponse au signal ; et
afficher automatiquement les informations sur l'écran (110).

2. Emballage selon la revendication 1, dans lequel l'élément de détection (340) est l'un parmi : un relais à lames souples, un commutateur mécanique, un capteur optique, un capteur magnétique.

3. Emballage selon une quelconque revendication précédente, dans lequel l'écran (110) comprend un écran tactile.

4. Emballage selon une quelconque revendication précédente, dans lequel le processeur (240) est en outre conçu pour provoquer, suite à la mise sous tension de l'appareil (100), la vérification que la mise sous tension était prévue.

5. Emballage selon une quelconque revendication précédente, dans lequel le processeur (240) est en outre conçu pour provoquer, suite à l'affichage des informations, la désactivation de l'élément de détection (340).

6. Emballage selon une quelconque revendication précédente, dans lequel le processeur (240) est en outre conçu pour provoquer l'activation d'une fonction de l'appareil (100) en réponse au signal.

7. Emballage selon la revendication 1, dans lequel l'élément (630) destiné à générer le signal est l'un parmi un aimant permanent ou une unité de communication en champ proche.

8. Procédé comprenant :
le déplacement d'une première partie (130) et d'une seconde partie (120) d'un emballage selon les revendications 1 à 7, l'une par rapport à l'autre, d'une position fermée à une position ouverte ; et
la génération d'un signal en réponse à la première partie (130) et à la seconde partie (120) étant déplacées de la position fermée à la position ouverte,
la détection du signal avec un élément de détection (340) compris dans un appareil (100) ;
la mise sous tension de l'appareil (100) en réponse au signal ; et
l'affichage des informations sur un écran (110) de l'appareil (100).

9. Procédé selon la revendication 8, dans lequel le signal est généré avec l'un parmi : un aimant permanent et une unité de communication en champ proche.

10. Procédé selon la revendication 8 ou 9, dans lequel l'élément de détection (340) est l'un parmi : un relais à lames souples, un commutateur mécanique, un capteur optique et un capteur magnétique.

11. Procédé selon la revendication selon l'une quelconque des revendications 8 à 10, comprenant en outre, suite à la mise sous tension de l'appareil (100), au moins l'une parmi : la vérification que la mise sous tension était prévue et la désactivation de l'élément de détection (340).

12. Procédé selon l'une quelconque des revendications 8 à 10, comprenant en outre, suite à l'affichage des informations, la désactivation de l'élément de détection (340).

13. Procédé selon l'une quelconque des revendications 8 à 12, comprenant en outre l'activation d'une fonction de l'appareil (100) en réponse au signal.
